# EUROPEAN PATENT SPECIFICATION

(11) **EP 2 046 590 B1**
(45) Date of publication and mention of the grant of the patent: **21.04.2010**
(21) Application number: 07768791.1
(22) Date of filing: 18.07.2007
(51) Int. Cl.: B60H 1/00

(54) **ASSEMBLING STRUCTURE OF TEMPERATURE- ADJUSTING DOOR**
MONTAGESTRUKTUR FÜR TEMPERATURREGELUNGSTÜR
STRUCTURE D'ASSEMBLAGE DE PORTE DE REGLAGE DE TEMPERATURE

(30) Priority: 24.07.2006 KR 20060068884; 26.10.2006 KR 20060104583
(43) Date of publication of application: 15.04.2009
(73) Proprietor: Halla Climate Control Corporation, Daejeon-si 306-230 (KR)
(72) Inventor: WANG, Yoonho, Daejeon-si 306-230 (KR); HAN, Seongseck, Daejeon-si 306-230 (KR); KIM, Youngchul, Daejeon-si 306-230 (KR); KIM, Yongsik, Daejeon-si 306-230 (KR); LEE, Haejun, Daejeon-si 306-230 (KR)
(74) Representative: Hirsch & Associés
(86) International application number: PCT/KR2007/003464
(87) International publication number: WO 2008/013375

(56) References cited:
- EP-A- 1 088 688
- EP-A- 1 630 017
- EP-A2- 1 088 688
- FR-A- 2 846 599
- JP-A- 11 240 321
- JP-A- 2001 328 419
- JP-A- 2001 328 419
- US-A1- 2005 142 999
- US-A1- 2005 142 999
- US-B1- 6 224 480
- US-B1- 6 224 480

## Description

### Technical Field

The present invention relates to an assembling structure of a temperature-adjusting door in an air-conditioner for vehicles, and more particularly, to an assembling structure of a temperature-adjusting door in an air-conditioner for vehicles, in which setting pins are formed on a gear shaft and support members having pin holes are formed on a sliding door such that the gear shaft and the sliding door are temporarily assembled with each other, and the temporarily assembled gear shaft and the sliding door are separated from each other when the temporarily assembled gear shaft and sliding door are mounted to an air-conditioning case, thereby preventing misassembly of the temperature-adjusting door, improving assemblability, and reducing the size of the air-conditioning case.

### Background Art

In general, an air-conditioner for a vehicle includes a cooling system for cooling the inside of the vehicle and a heating system for heating the inside of the vehicle.

The cooling system converts blast air into cold air by a heat exchange between refrigerant circulated into a compressor after passing through a condenser, a receiver dryer, an expansion valve and an evaporator by an operation of the compressor and the blast air passing through the surface of the evaporator by an air blast, and discharges the cold air to the inside of the vehicle to cool the inside of the vehicle.

In addition, the heating system introduces cooling water into a heater core and heat-exchanges the cooling water with the blast air blown from the air blast to heat the inside of the vehicle.

Such an air-conditioner for the vehicle is divided into three types.

As one of the three types, there is a three piece type air-conditioner where an air blast unit, an evaporator unit and a heater unit are constructed independently, but the three piece type air-conditioner has several problems in that it occupies a large inside space of the vehicle due to its large size, and productivity is deteriorated.

So, a compact-sized air-conditioner is required to increase efficiency in utilizing the inside space of the vehicle. In response to such a demand, recently, a semi-center mounting type air-conditioner where the evaporator unit and the heater unit are mounted integrally or a center mounting type air-conditioner where the air blast unit, the evaporator unit and the heater unit are all mounted integrally are increased in use.

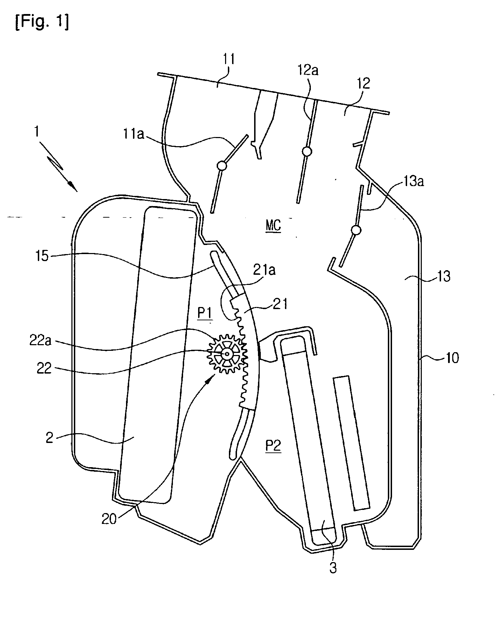

FIG. 1 illustrates an example of a semi-center mounting type air-conditioner according to a prior art, and the air blast unit is not shown in FIG. 1.

The air-conditioner 1 for the vehicle shown in FIG. 1 includes: an air-conditioning case 10 having a defrost vent 11, a face vent 12 and a floor vent 13 respectively mounted at an air outflow port of the air-conditioning case 10 and adjusted in a degree of their opening by mode doors 11a, 12a and 13a; an air blast (not shown) connected to an air inflow port of the air-conditioning case 10 for blowing the indoor air or the outdoor air; an evaporator 2 and a heater core 3 embedded in the air-conditioning case 10; and a temperature-adjusting door 20 for controlling a mixed amount of cold air passing through the evaporator 2 and hot air passing through the heater core 3.

Here, the temperature-adjusting door 20 is classified into a flat type, a dome type, a sliding type, and so on. FIG. 1 shows a case that the sliding type temperature-adjusting door is applied.

The temperature-adjusting door 20 is slidably mounted on sliding grooves 15 formed on both side walls of the inside of the air-conditioning case 10, and includes: a sliding door 21 having a gear portion 21 a formed on a side; and a gear shaft 22 rotatably coupled to through-holes (not shown) formed on both side walls of the air-conditioning case 10 and having a gear portion 22a geared with the gear portion 21a of the sliding door 21 to operate the sliding door 21.

Such a temperature-adjusting door 20 controls a degree of opening of an outlet of a cold air passageway P1 and an inlet of a hot air passageway P2 to thereby control the mixed amount of the cold air and the hot air.

According to the air-conditioner 1 for the vehicle configured as described above, when the maximum cooling mode is operated, the temperature-adjusting door 20 opens the cold air passageway P1 but closes the hot air passageway P2. Moreover, when the maximum heating mode is operated, the temperature-adjusting door 20 closes the cold air passageway P1 but opens the hot air passageway P2.

Therefore, when the maximum cooling mode is operated, air blown from the air blast (not shown) is converted into cold air after being heat-exchanged with refrigerant flowing inside the evaporator 2 while passing through the surface of the evaporator 2, flows toward a mixing chamber (MC) through the cold air passageway P1, and is discharged to the inside of the vehicle through the vent opened by a predetermined air-conditioning mode (a vent mode, a floor mode, a defrost mode, a bi-level mode, or a mix mode) to thereby cool the inside of the vehicle.

Furthermore, when the maximum heating mode is operated, the blown air is converted into hot air by being heat-exchanged with cooling water flowing inside the heater core 3 while passing through the heater core 3 through the hot air passageway P2, flows toward the mixing chamber, and is discharged to the inside of the vehicle through the vent opened by a predetermined air-conditioning mode to thereby heat the inside of the vehicle.

In addition, when not the maximum cooling mode but a general cooling mode, namely a 1/2 cooling mode, is operated, as shown in FIG. 1, the temperature-adjusting door 20 is rotated to a neutral position to thereby open the outlet of the cold air passageway P1 and the inlet of the hot air passageway P2. Therefore, the cold air passing through the evaporator 2 and the hot air passing through the heater core 3 flow toward the mixing chamber (MC) and are mixed with each other, and then, discharged to the inside of the vehicle through the vent opened by a predetermined air-conditioning mode.

In the meantime, to enhance assemblability of the temperature-adjusting door 20 (including the sliding door and the gear shaft) assembled to the air-conditioning case 10, as shown in FIG. 2, JP 11-240321 discloses a temperature-adjusting door, wherein a frame 25 is formed at a side of the sliding door 21 and the gear shaft 22 is fixed on the frame 25 to temporarily assemble the sliding door 21 and the gear shaft 22 with each other before they are assembled to the air-conditioning case 10.

However, if the gear shaft 22 is temporarily assembled to the frame 25 of the sliding door 21 and the temporarily assembled sliding door 21 and frame 25 are assembled to the air-conditioning case 10, assemblability may be enhanced, but causes another problem in that a manufacturing cost is increased since the frame 25 must be additionally formed on the sliding door 21.

Additionally, since weight of the sliding door 21 is increased by the frame 25, a load may be generated to an actuator (not shown), which rotates the gear shaft 22 to operate the sliding door 21.

### Disclosure of Invention

### Technical Problem

Accordingly, the present invention has been made to solve the above-mentioned problems occurring in the prior arts, and it is an object of the present invention to provide an assembling structure of a temperature-adjusting door in an air-conditioner for vehicles, in which setting pins are formed on a gear shaft and support members having pin holes are formed on a sliding door in such a way that the gear shaft and the sliding door are temporarily assembled with each other and the temporarily assembled gear shaft and the sliding door are separated from each other when the temporarily assembled gear shaft and sliding door are mounted to an air-conditioning case, thereby preventing misassembly of the temperature-adjusting door, improving assemblability, reducing the size of the air-conditioning case and a load of an actuator operating the sliding door, and preventing noise since it is operated without interference during the operation.

### Technical Solution

To accomplish the above object, according to the present invention, there is provided an assembling structure of a temperature-adjusting door in an air-conditioner for vehicles, which includes: an air-conditioning case having an evaporator and a heater core embedded therein; and a temperature-adjusting door having a sliding door slidably mounted inside the air-conditioning case and a gear shaft rotatably mounted to the air-conditioning case in such a way as to be gear-coupled with the sliding door, wherein setting pins are formed on the gear shaft and support members are formed on the sliding door, the support members respectively having pin holes for coupling the setting pins thereto, so that the gear shaft and the sliding door are temporarily assembled with each other and the temporarily assembled gear shaft and the sliding door are separated from each other after the temporarily assembled gear shaft and sliding door are mounted to the air-conditioning case.

### Brief Description of the Drawings

The above and other objects, features and advantages of the present invention will be apparent from the following detailed description of the preferred embodiments of the invention in conjunction with the accompanying drawings, in which:

FIG. 1 is a sectional view of an air-conditioner for vehicles according to a prior art;

FIG. 2 is a perspective view showing an example of a temperature-adjusting door of the air-conditioner for the vehicles according to the prior art;

FIG. 3 is an exploded perspective view of a temperature-adjusting door of an air-conditioner for vehicles according to a first preferred embodiment of the present invention;

FIG. 4 is a perspective view showing a state where a gear shaft and a sliding door of FIG. 3 are temporarily assembled with each other;

FIG. 5 is a perspective view showing a state where the temperature-adjusting door according to the first preferred embodiment is mounted to an air-conditioning case;

FIG. 6 is a perspective view showing a state where a setting pin is broken after the temperature-adjusting door according to the first preferred embodiment is assembled to the air-conditioning case;

FIG. 7 is an exploded perspective view of a temperature-adjusting door of the air-conditioner for vehicles according to a second preferred embodiment of the present invention;

FIG. 8 is a perspective view showing a state where a gear shaft and a sliding door of FIG. 7 are temporarily assembled with each other;

FIG. 9 is a perspective view showing a state where the temperature-adjusting door temporarily assembled according to the second preferred embodiment is assembled to the air-conditioning case;

FIG. 10 is a perspective view showing a state where a setting pin is slidably separated from a pin hole of a support member after the temperature-adjusting door according to the second preferred embodiment is assembled to the air-conditioning case.

### Mode for the Invention

Reference will be now made in detail to the preferred embodiment of the present invention with reference to the attached drawings.

The same parts as the prior art have the same reference numerals as the prior art.

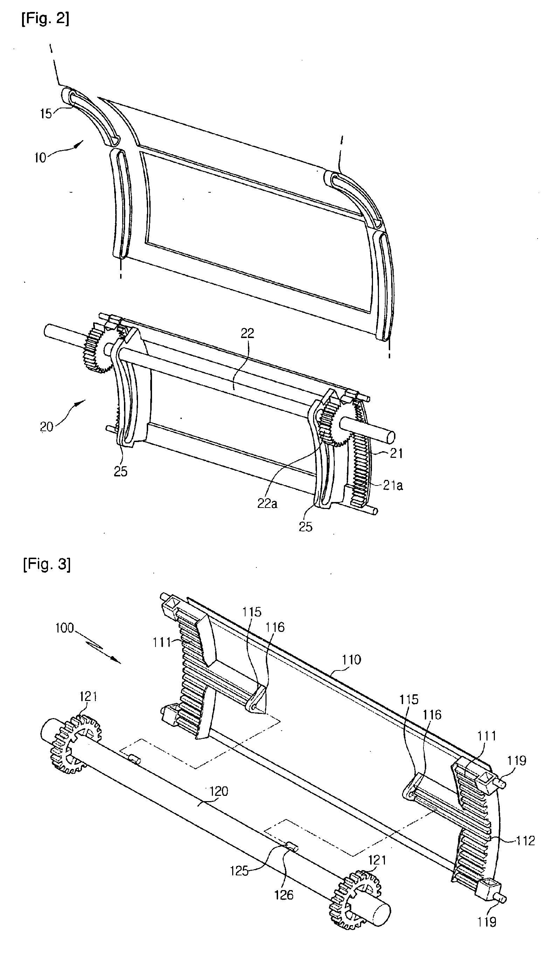

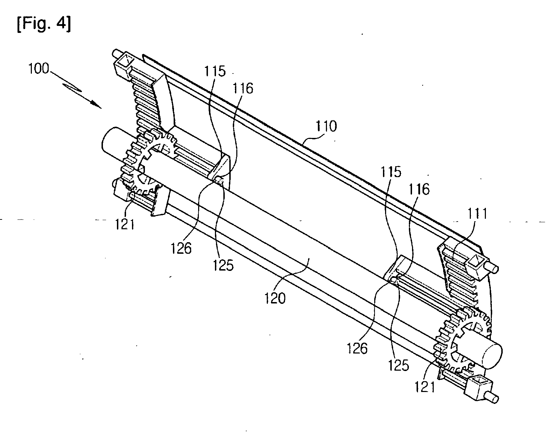

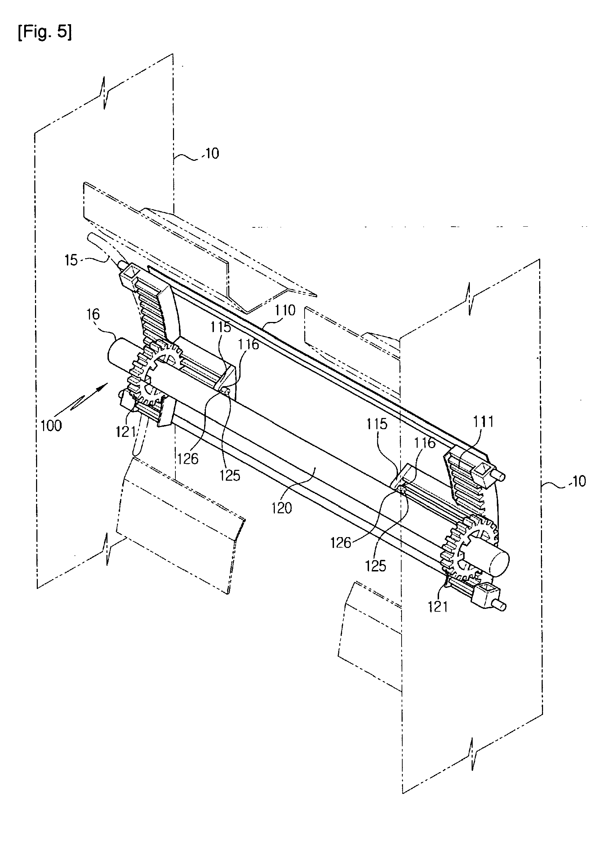

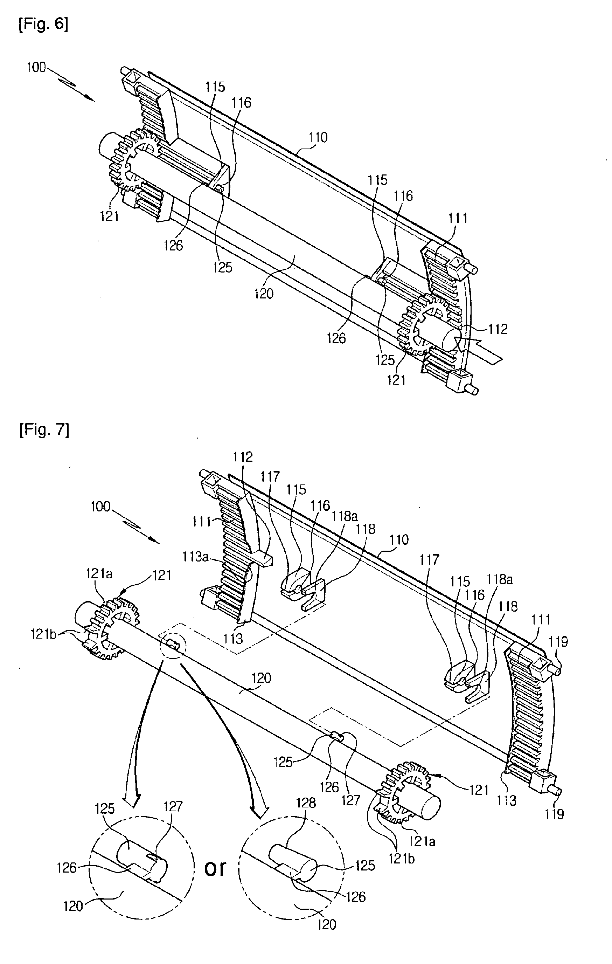

FIG. 3 is an exploded perspective view of a temperature-adjusting door of an air-conditioner for vehicles according to a first preferred embodiment of the present invention, FIG. 4 is a perspective view showing a state where a gear shaft and a sliding door of FIG. 3 are temporarily assembled with each other, FIG. 5 is a perspective view showing a state where the temperature-adjusting door according to the first preferred embodiment is mounted to an air-conditioning case, and FIG. 6 is a perspective view showing a state where a setting pin is broken after the temperature-adjusting door according to the first preferred embodiment is assembled to the air-conditioning case.

Referring to FIG. 1, the air-conditioner 1 for the vehicle according to the present invention includes: an air-conditioning case 10 having a cold air passageway P1 and a hot air passageway P2 formed therein, an evaporator 2 embedded in the cold air passageway P1 and a heater core 3 embedded in the hot air passageway P2; and a temperature-adjusting door 100 for controlling volumes of cold air passing through the evaporator 2 and hot air passing through the heater core 3.

An air blast (not shown) is mounted at an air inflow port of the air-conditioning case 10 to blow the indoor air or the outdoor air into the air-conditioning case 10.

In addition, at an air outflow port of the air-conditioning case 10, a defrost vent 11 for discharging air toward the front window of the vehicle, a face vent 12 for discharging air toward a passenger's face, and a floor vent 13 for discharging air toward the passenger's feet are formed in order. The vents are respectively opened and closed by mode doors 11a, 12a and 13a and adjusted in a degree of their opening.

The heater core 3 is mounted on the hot air passageway P2 of the air-conditioning case 10, and the evaporator 2 is mounted on the cold air passageway P1 of the air-conditioning case 10, namely, adjacent to the air inflow port of the air-conditioning case 10, which is the upstream side of the hot air passageway P2.

Meanwhile, the air-conditioning case 10 is divided into the right and left sides to allow mounting of the mode doors 11a, 12a and 13a, the temperature-adjusting door 100, and so on therein.

Moreover, the temperature-adjusting door 100 is a sliding type door, and includes: a sliding door 110 slidably mounted on sliding grooves 15 formed on the inner wall surfaces of both sides of the air-conditioning case 10 and having gear portions 111 formed on a side thereof; and a gear shaft 120 located in front of the sliding door 110, rotatably coupled to through-holes 16 formed on both side walls of the air-conditioning case 10, and having gear portions 121 geared with the gear portions 111 of the sliding door 110 to operate the sliding door 110.

Here, since the gear portions 111 are formed at both end portions of the sliding door 110, also the gear portions 121 are formed at positions corresponding to the gear portions 111 formed at both end portions of the sliding door 110.

Furthermore, the sliding door 110 has support pins 119 protruding at edges of both end portions thereof and inserted and coupled to the sliding grooves 115, so that the sliding door 110 can be slidably mounted on the sliding grooves 15 formed on the inner wall surfaces of both sides of the air-conditioning case 10.

Therefore, when the gear shaft 120 is rotated by an actuator (not shown) mounted on the outer surface of the air-conditioning case 10, the sliding door 110 gear-coupled with the gear shaft 120 slidably operates to control the degree of opening of the outlet of the cold air passageway P1 and the inlet of the hot air passageway P2, whereby a mixed volume of the cold air and the hot air can be controlled.

The gear shaft 120 and the sliding door 110 are temporarily assembled with each other before being mounted to the air-conditioning case 10 to secure a coupled position of the gear shaft 120 and the sliding door 110. The temporarily assembled gear shaft and the sliding door can be released after the temporarily assembled gear shaft 120 and sliding door 110 are mounted to the air-conditioning case 10. For this, the gear shaft 120 has setting pins 125 and the sliding door 110 has support members 115 respectively having pin holes 116 to couple the setting pins 125 thereto. The reason is to prevent a deviation between the gear shaft 120 and the sliding door 110 when the gear shaft 120 and the sliding door 110 are assembled to the air-conditioning case 10.

Here, it is preferable that two support members 115 respectively protrude toward the inside of the gear portions 111 of the sliding door 110, but two or more support members 115 may be formed.

In addition, the setting pins 125 formed on the gear shaft 120 are respectively formed at positions corresponding to the support members 115, and connected integrally with the gear shaft 120 by means of connection portions 126.

Here, it is preferable that the connection portions 126 are formed as weak as they can be broken even with a small power.

Meanwhile, as shown in FIG. 4, when the setting pins 125 and the support members 115 are coupled with each other, the gear shaft 120 is coupled with the sliding door 110 in a state where the gear shaft 120 is biased from the center of the sliding door 110, and at the same time, the gear portions 121 of the gear shaft 120 and the gear portions 111 of the sliding door 110 are not yet geared with each other.

Here, it is preferable that the gear portions 121 of the gear shaft 120 and the gear portions 111 of the sliding door 110 are not yet geared with each other when the setting pins 125 and the support members 115 are coupled with each other, but the present invention is not restricted to the above. That is, when the setting pins 125 and the support members 115 are coupled with each other, the gear shaft 120 and the sliding door 110 are not coupled with each other at a regular position (state where each gear portion is completely geared) but coupled in a state where the gear shaft 120 is biased from the center of the sliding door 110. In this instance, the gear portions 111 and 121 are partially geared with each other.

For instance, just about 1/3 of the gear portion 121 of the gear shaft 120 is geared with the gear portion 111 of the sliding door 110.

The setting pins 125 and the support members 115 are used only for the purpose to temporarily assemble the gear shaft 120 and the sliding door 110 with each other, and after the gear shaft 120 and the sliding door 110 are finally assembled to the air-conditioning case 10, the temporarily assembled state between the gear shaft 120 and the sliding door 110 is released to operate the sliding door 110.

So, when the temperature-adjusting door 100 temporarily assembled before the gear portions 121 of the gear shaft 120 and the gear portions 11 of the sliding door 110 are geared with each other is finally assembled to the air-conditioning case 10, during a process that the divided air-conditioning case 10 is assembled completely, the gear shaft 120 biased is located at the regular position by pressure generated when the air-conditioning case 10 is assembled completely. In this above process, the gear portions 111 and 121 are geared completely, and at the same time, the setting pins 125 are broken and separated from the gear shaft 120.

Of course, the setting pins 125 broken and separated from the gear shaft 120 continuously keep the state where they are inserted and coupled to the pin holes 116 of the support members 115.

Meanwhile, in the state where the setting pins 125 and the support members 115 are coupled with each other, the gear portions 121 of the gear shaft 120 and the gear portions 111 of the sliding door 110 are not yet geared with each other. So, when the sliding door 110 and the gear shaft 120 are finally assembled to the air-conditioning case 10 in the above state, to induce a correct and easy assembly, the gear portion 111 of the sliding door 110 has a guide gear 112 formed on a side thereof by extending a central gear portion of the gear portion 111 to a side.

The guide gear 112 may be selectively formed in the inward direction or the outward direction of the gear portion 111 of the sliding door 110.

That is, the guide gear 112 supports the gear portion 121 of the gear shaft 120 into a geared state when the gear portions 111 and 121 are not yet geared with each other, guides the gear portion 121 of the gear shaft 120 to thereby be correctly and smoothly geared to the gear portion 111 of the sliding door 110 when the gear shaft 120 is finally assembled to the air-conditioning case 10.

Hereinafter, a method for assembling the temperature-adjusting door of the air-conditioner according to the first preferred embodiment of the present invention will be described.

First, before the gear shaft 120 and the sliding door 110 are assembled to the air-conditioning case 10, the setting pins 125 of the gear shaft 120 are inserted and coupled to the pin holes 116 formed on the support members 115 of the sliding door 110 to thereby temporarily assemble the gear shaft 120 and the sliding door 110 with each other.

In this instance, the gear shaft 120 is coupled with the sliding door 110 in the state where it is biased from the center of the sliding door 110, and the gear portions 121 of the gear shaft 120 and the gear portions 111 of the sliding door 110 are not yet geared with each other.

After that, the temporarily assembled gear shaft 120 and sliding door 110 are assembled to the air-conditioning case 10. That is, when an end portion of the gear shaft 120 is first completely inserted into the through-hole 16 of the one side air-conditioning case 10 and then the other side air-conditioning case 10 is assembled, the gear shaft 120 biased in relation with the sliding door 110 is located at the regular position and the other end portion of the gear shaft 120 is completely inserted and coupled to the through-hole 16 of the other side air-conditioning case 10. At the same time, the support pins 119 of the sliding door 110 are seated and coupled to the sliding grooves 115 formed on the inner wall surface of the air-conditioning case 10.

In this instance, during the process that the gear shaft 120 is located at the regular position, the setting pins 125 of the gear shaft 120 are broken and separated from the gear shaft 120, and at the same time, the gear portions 121 of the gear shaft 120 are completely geared with the gear portions 111 of the sliding door 110, whereby the temperature-adjusting door 100 is completely assembled.

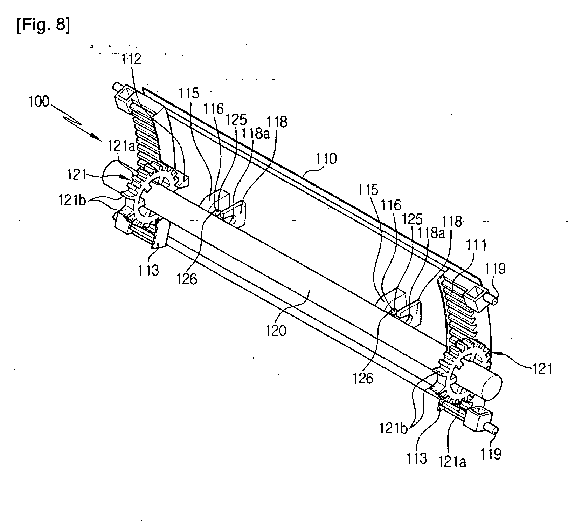

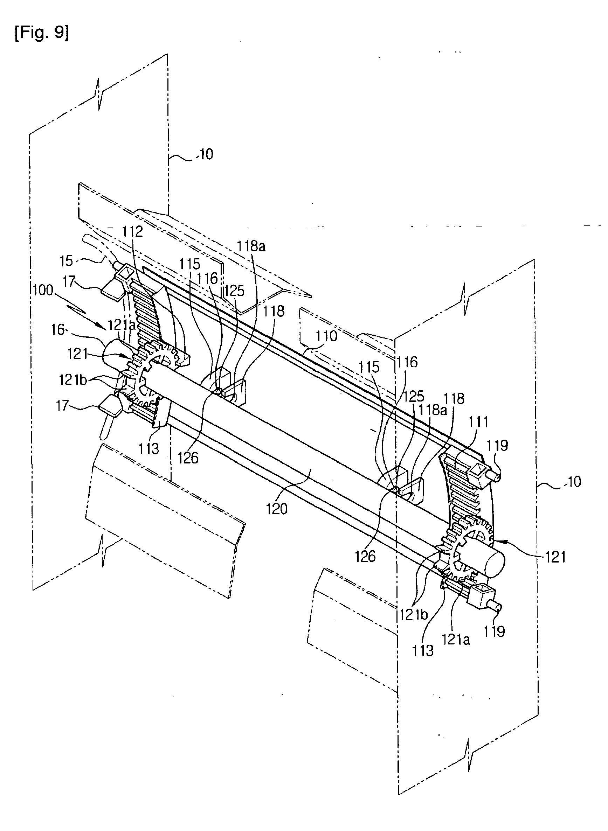

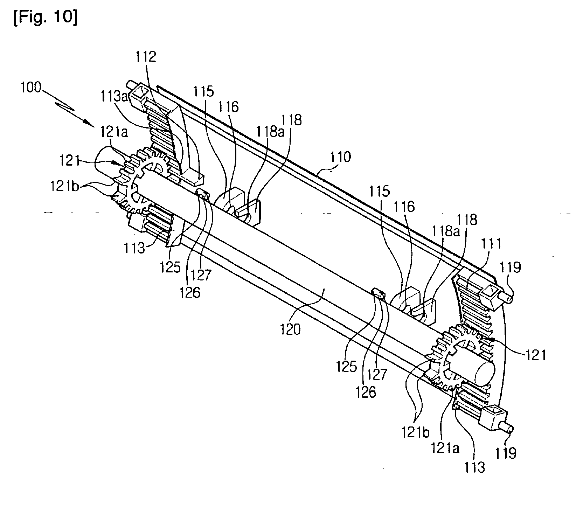

FIG. 7 is an exploded perspective view of a temperature-adjusting door of the air-conditioner for vehicles according to a second preferred embodiment of the present invention, FIG. 8 is a perspective view showing a state where a gear shaft and a sliding door of FIG. 7 are temporarily assembled with each other, FIG. 9 is a perspective view showing a state where the temperature-adjusting door temporarily assembled according to the second preferred embodiment is assembled to the air-conditioning case, and FIG. 10 is a perspective view showing a state where a setting pin is slidably separated from a pin hole of a support member after the temperature-adjusting door according to the second preferred embodiment is assembled to the air-conditioning case. In the second preferred embodiment, the same description as the first preferred embodiment will be omitted.

As shown in the drawings, in the second preferred embodiment, to temporarily assemble the gear shaft 120 and the sliding door 110 with each other before they are assembled to the air-conditioning case 10 and remove the temporarily assembled state after they are assembled to the air-conditioning case 10, the gear shaft 120 has the setting pins 125, the sliding door 110 has the support members 115 having the pin holes 116 to couple the setting pins 125 thereto, and each pin hole 116 has an opening 117 formed at a side thereof so that the setting pin 125 can be slidably separated from the pin hole 116 in an insertion direction of the pin hole 116.

In this instance, a cut portion formed on the pin hole 116 by the opening 117 has a predetermined elasticity.

In addition, the setting pins 125 are inserted and coupled to the pin holes 116 of the support members 115 when the gear shaft 120 and the sliding door 110 are temporarily assembled with each other, and in this instance, to slidably separate the setting pins 125 from the pin holes 116 in the insertion direction of the pin holes 116 only when the external force of more than a predetermined level is applied, each setting pin 125 has a protrusion 127 formed on an end portion or a tapered surface 128 formed on the outer peripheral surface of the setting pin 125.

That is, the setting pins 125 are inserted and coupled to the pin holes 116 of the support members 115 to temporarily assemble the gear shaft 120 and the sliding door 110 with each other, and in this instance, the temporarily assembled state can be kept since the setting pins 125 are inserted into the pin holes 116 no more by being caught to the pin holes 116 by means of the protrusions 127 formed on the end portions of the setting pins 125 or the tapered surfaces 128 formed on the outer peripheral surfaces of the setting pins 125. Here, as far as the external force of more than the predetermined level is not applied to the gear shaft 120 or the sliding door 110, the setting pins 125 are not separated from the pin holes 116 in the insertion direction of the pin holes 116 but continuously keeps the temporarily assembled state.

However, when the external force of more than the predetermined level is applied to the gear shaft 120 or the sliding door 110, namely, when the temporarily assembled gear shaft 120 and sliding door 110 are assembled to the air-conditioning case 10, the external force of more than the predetermined level is applied to the gear shaft 120 or the sliding door 110 while the divided air-conditioning case 10 is assembled completely. In this instance, the setting pins 125 are slidably separated from the pin holes 116 in the insertion direction of the pin holes 116.

Here, the connection portion 126 for connecting the setting pin 125 to the gear shaft 120 slides along the opening 117 of the support member 115, and the protrusion 127 or the tapered surface 128 formed on the setting pin 125 passes through the pin hole 116 while widening the pin hole 116 during the process that the setting pin 125 slides the pin hole 116.

As described above, the setting pin 125 is separated from the pin hole 116 after the temporarily assembled gear shaft 120 and the sliding door 110 are assembled to the air-conditioning case completely, whereby the gear shaft 120 and the sliding door 110 can be operated without interference and noise.

Furthermore, the sliding door 110 further includes a guide 118 protruding on a side of the support member 115 to correctly and simply guide and insert the setting pin 125 to the pin hole 116.

The guide 118 has a seating groove 118a formed at an end portion thereof to stably seat the setting pin 125 thereon and guide the setting pin 125 to coincide with the pin hole 116 of the support member 115.

So, when the gear shaft 120 and the sliding door 110 are temporarily assembled with each other, first, the two setting pins 125 formed on the gear shaft 120 and spaced apart from each other at a predetermined interval are respectively seated on the seating grooves 118a of the guides 118 and slidably moved toward the pin holes 116. Then, the setting pins 125 can be correctly and easily inserted and coupled to the pin holes 116.

Additionally, when the temporarily assembled gear shaft 120 and the sliding door 110 are assembled to the air-conditioning case 10, to correctly locate, seat and couple the support pins 119 formed at both end portions of the sliding door 110 onto the sliding grooves 15 formed on the inner wall surface of the air-conditioning case 10, the air-conditioning case 10 has guide plates 17 protruding on the inner wall surface thereof to guide the support pins 119 to the sliding grooves 15. Here, the guide plate 17 has an inclined surface formed on a side surface thereof to smoothly guide the support pin 119 to the sliding groove 15.

It is preferable that total two guide plates 17 are formed at both sides of the through-hole 16 of the air-conditioning case 10 and spaced apart from each other at a predetermined distance to allow the mounting of the gear shaft 120.

In addition, it is preferable that a gear 121b, which engages with gears formed at both ends of the gear portion 11 of the sliding door 110, out of gears 121a and 121b formed on the gear portion 121 of the gear shaft 120 is larger than the other gear 121a.

That is, the gear shaft 120 is rotated in the clockwise direction or in the counterclockwise direction in relation with the position, where the gear shaft is initially assembled to the sliding door 110, to thereby operate the sliding door 110. Here, when the gear shaft 120 is rotated to an end position of the clockwise direction or the counterclockwise direction so that the sliding door 110 is located at the top dead center or the bottom dead center, since the gear-engagement level of the gear portion 121 of the gear shaft 120 and the gear portion 111 of the sliding door 110 is reduced, the gear 121b formed at the end of the clockwise direction or the counterclockwise direction of the gear shaft 120 is formed larger than the other gear 121a to thereby be firmly geared with the gears formed at both ends of the gear portion 111 of the sliding door 110.

In addition, the guide gear 112 is formed in the outward direction of the gear portion 111 of the sliding door 110 in the first preferred embodiment, but formed in the inward direction of the gear portion 111 of the sliding door 110 in the second preferred embodiment. As described above, the guide gear 112 can be formed in various locations, for instance, in the inward direction or the outward direction of the gear portion 111 of the sliding door 110.

Meanwhile, it is preferable that the outer surface of the sliding door 110 is coated with rubber to improve sealability.

Moreover, the sliding door 110 has closed plates 113 formed on the opposed faces of the gear portions 111 formed at both end portions thereof in such a way as to close a side of each gear portion 111. One of the closed plates 113 has an opened groove 113a. Here, it is preferable that the groove 113a is located at a position corresponding to the gear portion 121 of the gear shaft 120 and has a curved surface larger than that of the outer diameter of the gear portion 121.

Therefore, since just one of the closed plates 113 has the groove 113a, the gear shaft 120 is assembled to the sliding door 110 only in one direction to prevent misassembly.

Hereinafter, a method for assembling the temperature-adjusting door of the air-conditioner according to the second preferred embodiment of the present invention will be described.

First, before the gear shaft 120 and the sliding door 110 are assembled to the air-conditioning case 10, the setting pins 125 of the gear shaft 120 are inserted and coupled to the pin holes 116 formed on the support members 115 of the sliding door 110 to thereby temporarily assemble the gear shaft 120 and the sliding door 110 with each other.

In this instance, the gear shaft 120 is coupled with the sliding door 110 in the state where it is biased from the center of the sliding door 110, and the gear portions 121 of the gear shaft 120 and the gear portions 111 of the sliding door 110 are not yet geared with each other.

After that, the temporarily assembled gear shaft 120 and sliding door 110 are assembled to the air-conditioning case 10. That is, when an end portion of the gear shaft 120 is first completely inserted into the through-hole 16 of the one side air-conditioning case 10 and then the other side air-conditioning case 10 is assembled, the gear shaft 120 biased in relation with the sliding door 110 is located at the regular position and the other end portion of the gear shaft 120 is completely inserted and coupled to the through-hole 16 of the other side air-conditioning case 10. At the same time, the support pins 119 of the sliding door 110 are seated and coupled to the sliding grooves 115 formed on the inner wall surface of the air-conditioning case 10.

In this instance, during the process that the gear shaft 120 is located at the regular position, the setting pins 125 of the gear shaft 120 are slidably separated in the insertion direction of the pin holes 116 of the support members 115 formed on the sliding door 110, and the gear portions 121 of the gear shaft 120 are completely geared with the gear portions 111 of the sliding door 110, whereby the temperature-adjusting door 100 is completely assembled.

As described above, in the above embodiments, the setting pins 125 are formed on the gear shaft 120 and the support members 115 having the pin holes 116 are formed on the sliding door 110, but on the contrary, it is also possible that the support members 115 having the pin holes 116 are formed on the gear shaft 120 and the setting pins are formed on the sliding door 110.

### Industrial Applicability

According to the present invention, the setting pins are formed on the gear shaft and the support members having the pin holes are formed on the sliding door in such a way as to temporarily assemble the gear shaft and the sliding door with each other, and the setting pins are broken and separated from the gear shaft when the temporarily assembled gear shaft and sliding door are assembled to the air-conditioning case, so that the gear shaft and the sliding door can be assembled with each other at a correct assembling position before they are assembled to the air-conditioning case and the deviation between the gear shaft and the sliding door can be prevented when the gear shaft and the sliding door are assembled to the air-conditioning case to thereby prevent misassembly and improve assemblability.

In addition, the pin hole of the support member has the opening formed at a side thereof, setting pin has the protrusion or the tapered surface formed on the outer peripheral surface thereof, and the setting pin is slidably separated from the pin hole in the insertion direction of the pin hole when the temporarily assembled gear shaft and sliding door are assembled to the air-conditioning case, whereby the gear shaft and the sliding door can be operated without interference and noise.

Moreover, since the setting pins and the support members for temporarily assembling the gear shaft and the sliding door with each other are small and simple in their structures, the size of the air-conditioning case and weight of the sliding door can be reduced to thereby reduce a load of the actuator for rotating the gear shaft.

Furthermore, since the sliding door has the guide, the setting pin can be correctly and easily inserted into the pin hole when the gear shaft and the sliding door are temporarily assembled with each other.

Additionally, since the air-conditioning case has the guide plates protruding on the inner wall surface thereof for guiding the support pins of the sliding door into the sliding grooves of the air-conditioning case, when the temporarily assembled gear shaft and sliding door are assembled to the air-conditioning case, the support pins of the sliding door can be seated and coupled to the sliding grooves of the air-conditioning case at the correct position to thereby improve assemblability and prevent misassembly.

While the present invention has been described with reference to the particular illustrative embodiment, it is not to be restricted by the embodiment but only by the appended claims. It is to be appreciated that those skilled in the art can change or modify the embodiment without departing from the scope of the present claims.

## Claims

1. An assembling structure of a temperature-adjusting door in an air-conditioner for vehicles, which comprises:
an air-conditioning case (10) having an evaporator (2) and a heater core (3) embedded therein; and
a temperature-adjusting door (100) having a sliding door (110) slidably mounted inside the air-conditioning case (10) and a gear shaft (120) rotatably mounted to the air-conditioning case (10) in such a way as to be gear-coupled with the sliding door (110), **characterised in that**
setting pins (125) are formed on the gear shaft (120) and support members (115) are formed on the sliding door (110), the support members (115) respectively having pin holes (116) for coupling the setting pins (125) thereto, so that the gear shaft (120) and the sliding door (110) are temporarily assembled with each other and the temporarily assembled gear shaft (120) and the sliding door (110) are separated from each other after the temporarily assembled gear shaft (120) and sliding door (110) are mounted to the air-conditioning case (10).

2. The assembling structure of the temperature-adjusting door according to claim 1, wherein the setting pins (125) are broken and separated from the gear shaft (120) when the temporarily assembled gear shaft (120) and sliding door (110) are mounted to the air-conditioning case (10).

3. The assembling structure of the temperature-adjusting door according to claim 1, wherein the gear shaft (120) is assembled with the sliding door (110) in a state where the gear shaft (120) is biased from the center of the sliding door (110), and gear portions (121) of the gear shaft (120) and gear portions (111) of the sliding door (110) are not yet geared with each other when the setting pins (125) and the support members (115) are coupled with each other.

4. The assembling structure of the temperature-adjusting door according to claim 1, wherein each pin hole (116) has an opening (117) formed at a side thereof so that the setting pin (125) can be slidably separated from the pin hole (116) in an insertion direction of the pin hole (116).

5. The assembling structure of the temperature-adjusting door according to claim 1, wherein the sliding door (110) has a guide (118) formed on a side of the support member (115) for guiding the setting pin (125) into the pin hole (116) so as to correctly insert the setting pin (125) into the pin hole (116) when the gear shaft (120) and the sliding door (110) are temporarily assembled with each other.

6. The assembling structure of the temperature-adjusting door according to claim 1, wherein the air-conditioning case (10) has guide plates (17) formed on the inner wall surface thereof for guiding support pins (119), which are formed at both end portions of the sliding door (110), into a sliding groove (15) formed on the inner wall surface of the air-conditioning case(10), so that the support pins (119) of the sliding door (110) can be correctly seated and coupled to the sliding groove (15) when the temporarily assembled gear shaft (120) and sliding door (110) are assembled to the air-conditioning case (10).

7. The assembling structure of the temperature-adjusting door according to claim 4, wherein the setting pin (125) has a protrusion (127) formed on an end portion thereof, so that the setting pin (125) is inserted and coupled to the pin hole (116) of the support member (115) when the gear shaft (120) and the sliding door (110) are temporarily assembled, but separated from the pin hole (116) in the insertion direction of the pin hole (116) only when the external force of more than a predetermined level is applied thereto.

8. The assembling structure of the temperature-adjusting door according to claim 4, wherein the setting pin (125) has a tapered outer peripheral surface (128) thereof, so that the setting pin (125) is inserted and coupled to the pin hole (116) of the support member (115) when the gear shaft (120) and the sliding door (110) are temporarily assembled, but separated from the pin hole (116) in the insertion direction of the pin hole (116) only when the external force of more than a predetermined level is applied thereto.

9. The assembling structure of the temperature-adjusting door according to claim 1, wherein gears (121b), which engages with gears formed at both ends of the gear portion (111) of the sliding door (110), out of gears (121a; 121b) formed on the gear portion (121) of the gear shaft (120) are larger than the other gears (121a).

10. The assembling structure of the temperature-adjusting door according to claim 1, wherein the sliding door (110) has closed plates (113) respectively formed on the opposed faces of the gear portions (111) thereof to close a side of each gear portion (111), and one of the closed plates (113) has an opened groove (113a).

## Patentansprüche

1. Montagestruktur einer Temperatureinstellungstür in einer Klimaanlage für ein Fahrzeug, wobei die Struktur Folgendes umfasst:
ein Klimaanlagengehäuse (10), das einen Verdampfer (2) und einen Heizerkern (3) hat, die darin eingebettet sind, und
eine Temperatureinstellungstür (100), die eine Schiebetür (110), die verschiebbar innerhalb des Klimaanlagengehäuses (10) angebracht ist, und eine Getriebewelle (120), die drehbar auf eine solche Weise an dem Klimaanlagengehäuse (10) angebracht ist, dass sie durch Getriebe mit der Schiebetür (110) gekoppelt ist, hat,
**dadurch gekennzeichnet, dass** Einsetzstifte (125) an der Getriebewelle (120) geformt sind und Stützelemente (115) an der Schiebetür (110) geformt sind, wobei die Stützelemente (115) jeweils Stiftlöcher (116) haben, um die Einsetzstifte (125) daran zu koppeln, so dass die Getriebewelle (120) und die Schiebetür (110) zeitweilig miteinander zusammengebaut sind, und die zeitweilig zusammengebaute Getriebewelle (120) und Schiebetür (110) voneinander getrennt werden, nachdem die zeitweilig zusammengebaute Getriebewelle (120) und Schiebetür (110) an dem Klimaanlagengehäuse (10) angebracht sind.

2. Montagestruktur der Temperatureinstellungstür nach Anspruch 1, wobei die Einsetzstifte (125) von der Getriebewelle (120) abgebrochen und getrennt werden, wenn die zeitweilig zusammengebaute Getriebewelle (120) und Schiebetür (110) an dem Klimaanlagengehäuse (10) angebracht werden.

3. Montagestruktur der Temperatureinstellungstür nach Anspruch 1, wobei die Getriebewelle (120) in einem Zustand mit der Schiebetür (110) zusammengebaut wird, in dem die Getriebewelle (120) aus der Mitte der Schiebetür (110) vorgespannt wird, und Getriebeabschnitte (121) der Getriebewelle (120) und Getriebeabschnitte (111) der Schiebetür (110) noch nicht in Eingriff miteinander gebracht sind, wenn die Einsetzstifte (125) und die Stützelemente (115) miteinander gekoppelt sind.

4. Montagestruktur der Temperatureinstellungstür nach Anspruch 1, wobei jedes Stiftloch (116) eine an einer Seite desselben geformte Öffnung (117) hat, so dass der Einsetzstift (125) in einer Einsetzrichtung des Stiftlochs (116) verschiebbar von dem Stiftloch (116) getrennt werden kann.

5. Montagestruktur der Temperatureinstellungstür nach Anspruch 1, wobei die Schiebetür (110) eine auf einer Seite des Stützelementes (115) geformte Führung (118) hat, um den Einsetzstift (125) in das Stiftloch (116) zu führen, um so den Einsetzstift (125) richtig in das Stiftloch (116) einzusetzen, wenn die Getriebewelle (120) und die Schiebetür (110) zeitweilig miteinander zusammengebaut werden.

6. Montagestruktur der Temperatureinstellungstür nach Anspruch 1, wobei das Klimaanlagengehäuse (10) auf der Innenwandfläche desselben geformte Führungsplatten (17) hat, um Stützstifte (119), die an beiden Endabschnitten der Schiebetür (110) geformt sind, in eine auf der Innenwandfläche des Klimaanlagengehäuses (10) geformte Schieberille (15) zu führen, so dass die Stützstifte (119) der Schiebetür (110) richtig gesetzt und mit der Schieberille (15) gekoppelt werden können, wenn die Getriebewelle (120) und die Schiebetür (110) an dem Klimaanlagengehäuse (10) montiert werden.

7. Montagestruktur der Temperatureinstellungstür nach Anspruch 4, wobei der Einsetzstift (125) einen an einem Endabschnitt desselben geformten Vorsprung (127) hat, so dass der Einsetzstift (125) in das Stiftloch (116) des Stützelementes (115) eingesetzt und damit gekoppelt wird, wenn die Getriebewelle (120) und die Schiebetür (110) zeitweilig zusammengebaut werden, aber nur dann in der Einsetzrichtung des Stiftlochs (116) von dem Stiftloch (116) getrennt wird, wenn die äußere Kraft von mehr als einem vorbestimmten Niveau auf denselben ausgeübt wird.

8. Montagestruktur der Temperatureinstellungstür nach Anspruch 4, wobei der Einsetzstift (125) eine verjüngte Außenumfangsfläche (128) desselben hat, so dass der Einsetzstift (125) in das Stiftloch (116) des Stützelementes (115) eingesetzt und damit gekoppelt wird, wenn die Getriebewelle (120) und die Schiebetür (110) zeitweilig zusammengebaut werden, aber nur dann in der Einsetzrichtung des Stiftlochs (116) von dem Stiftloch (116) getrennt wird, wenn die äußere Kraft von mehr als einem vorbestimmten Niveau auf denselben ausgeübt wird.

9. Montagestruktur der Temperatureinstellungstür nach Anspruch 1, wobei von an dem Getriebeabschnitt (121) der Getriebewelle (120) geformten Zahnrädern (121a; 121b) die Zahnräder (121b), die mit an beiden Enden des Getriebeabschnitts (111) der Schiebetür (110) geformten Zahnrädern ineinandergreifen, größer sind als die anderen Zahnräder (121a).

10. Montagestruktur der Temperatureinstellungstür nach Anspruch 1, wobei die Schiebetür (110) geschlossene Platten (113) hat, die jeweils auf den entgegengesetzten Flächen der Getriebeabschnitte (111) derselben geformt sind, um eine Seite jedes Getriebeabschnitts (111) zu schließen, und eine der geschlossenen Platten (113) eine geöffnete Rille (113a) hat.

## Revendications

1. Structure permettant l'assemblage d'une porte de réglage de température dans un climatiseur destiné à des véhicules, comprenant :
un boîtier de climatisation (10) dans lequel sont embarqués un évaporateur (10) et un noyaux chauffant (3) ; et
une porte de réglage de température (100) ayant une porte coulissante (110) montée de façon coulissante dans le boîtier de climatisation (10) et un arbre à pignon (120) monté de façon rotative sur le boîtier de climatisation (10) d'une façon assurant son engrenage avec la porte coulissante (110),
**caractérisé en ce que** des ergots de positionnement (125) sont formés sur l'arbre à pignon (120) et des organes de support (115) sont formés sur la porte coulissante (110), les organes de support (115) présentant respectivement des trous pour ergot (116) pour couplage avec les ergots de positionnement (125), assurant ainsi l'assemblage temporaire de l'arbre à pignon (120) et de la porte coulissante (110) l'un à l'autre, et l'arbre à pignon (120) et la porte coulissante (110), assemblés temporairement, se séparent l'un de l'autre après le montage de l'arbre à pignon (120) et la porte coulissante (110), assemblés de façon temporaire, sur le boîtier de climatisation (10).

2. Structure permettant l'assemblage de la porte de réglage de température selon la revendication 1, dans laquelle les ergots de positionnement (125) sont rompus et séparés de l'arbre à pignon (120) lorsque l'arbre à pignon (120) et la porte coulissante (110), assemblés de façon temporaire, sont montés dans le boîtier de climatisation (10)

3. La structure permettant l'assemblage d'une porte de réglage de température selon la revendication 1, dans laquelle l'arbre à pignon (120) est assemblé avec la porte coulissante (110) dans un état où l'arbre à pignon (120) est sollicité pour s'éloigner du centre de la porte coulissante (110), et des parties d'engrenage (121) de l'arbre à pignon (120) et des parties d'engrenage (111) de la porte coulissante (110) ne sont pas encore engagés l'un avec l'autre lorsque les ergots de positionnement (125) et les organes de support (115) sont couplés l'un à l'autre.

4. Structure permettant l'assemblage d'une porte de réglage de température selon la revendication 1, dans laquelle chaque trou pour ergot (116) présente une ouverture (117) formée sur l'un de ses côtés permettant la séparation par glissement de l'ergot de positionnement (125) du trou pour ergot (116) selon une direction d'insertion du trou pour ergot (116).

5. Structure permettant l'assemblage d'une porte de réglage de température selon la revendication 1, dans laquelle la porte coulissante (110) présente un élément de guidage (118) formé sur un côté de l'organe de support (115) pour guider l'ergot de positionnement (125) dans le trou pour ergot (116) assurant ainsi une bonne insertion de l'ergot de positionnement (125) dans le trou pour ergot (116) lors de l'assemblage temporaire de l'arbre à pignon (120) et de la porte coulissante (110) l'un avec l'autre.

6. Structure permettant l'assemblage d'une porte de réglage de température selon la revendication 1, dans laquelle le boîtier de climatisation (10) présente des plaques de guidage (17) formées sur sa surface de paroi interne pour guider le passage d'ergots de support (119) formés aux deux parties d'extrémité de la porte coulissante (110) dans une rainure de coulissement (15) formée sur la surface de paroi interne du boîtier de climatisation (10), pour assurer une bonne assise des ergots de support (119) de la porte coulissante (110) ainsi que leur couplage avec la rainure de coulissement (15) lors de l'assemblage de l'arbre à pignon (120) et de la porte coulissante (110), assemblés de façon temporaire, sur le boîtier de climatisation (10).

7. Structure permettant l'assemblage d'une porte de réglage de température selon la revendication 4, dans laquelle l'ergot de positionnement (125) présente une saillie (127) formée sur l'une de ses parties d'extrémité, de sorte que, lors de l'assemblage temporaire de l'arbre à pignon (120) avec la porte coulissante (110), l'ergot de positionnement (125) est inséré dans le trou pour ergot (116) de l'organe de support (115) et se trouve couplé avec celui-ci, mais se trouve séparé du trou pour ergot (116) dans la direction d'insertion du trou pour ergot (116) uniquement lors de l'application à celui-ci de la force externe dépassant un niveau prédéterminé.

8. Structure permettant l'assemblage d'une porte de réglage de température selon la revendication 4, dans laquelle l'ergot de positionnement (125) présente une surface périphérique extérieure effilée (128) assurant l'insertion de l'ergot de positionnement (125) dans le trou pour ergot (116) de l'organe de support (115) et son couplage avec celui-ci lorsque l'arbre à pignon (120) et la porte coulissante (110) sont assemblés de façon temporaire, mais se trouvent séparés du trou pour ergot (116) selon la direction d'insertion du trou pour ergot (116) uniquement lors de l'application d'une force externe à celui-ci dépassant un niveau prédéterminé.

9. Structure permettant l'assemblage d'une porte de réglage de température selon la revendication 1, dans laquelle, parmi les dents d'engrenage (121a; 121b) formées sur la partie d'engrenage (121) de l'arbre à pignon (120), les dents d'engrenage (121b) qui s'engagent avec les engrenages formés aux deux extrémités de la partie d'engrenage (111) de la porte coulissante (110) sont plus grandes que les autres dents d'engrenage (121a).

10. Structure permettant l'assemblage d'une porte de réglage de température selon la revendication 1, dans laquelle la porte coulissante (110) présente des plaques de fermeture (113) formées respectivement sur les faces opposées de ses parties d'engrenage (111) destinés à fermer un côté de chaque partie d'engrenage (111), et l'une des plaques de fermeture (113) présente une rainure ouverte (113a).
